# EUROPEAN PATENT APPLICATION

(11) **EP 4 632 901 A1**
(43) Date of publication of application: **15.10.2025**
(21) Application number: 24169463.7
(22) Date of filing: 10.04.2024
(51) Int. Cl.: H01M 50/209, H01M 50/224, H01M 50/242, H01M 50/244, H01M 50/249

(54) **BATTERY SYSTEM WITH IMPROVED CELL STACK FRAME**

(71) Applicant: Samsung SDI Co., Ltd., Yongin-si, Gyeonggi-do 17084 (KR)
(72) Inventor: Bloder, Martin, 8261 Sinabelkirchen (AT)
(74) Representative: Gulde & Partner

(57) **Abstract**

The present disclosure refers to a battery system (100) comprising a plurality of battery cells (12) arranged to form a cell stack (10), and a cell stack frame (20) accommodating the cell stack (10), wherein the cell stack frame (20) comprises at least one deformable end plate (22) comprising a base portion (221) and a Belleville spring portion (222) extending from the base portion (221) towards the cell stack (10), wherein the deformable end plate (22) exerts a pressure onto the cell stack (10) via the Belleville spring portion (222).

## Description

### Field of the Disclosure

The present disclosure relates to a battery system with an improved cell stack frame. Further, the present invention relates to a vehicle including such a battery system.

### Technological Background

Recently, vehicles for transportation of goods and peoples have been developed that use electric power as a source for motion. Such an electric vehicle is an automobile that is propelled permanently or temporarily by an electric motor, using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to give power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected in series or in parallel. That is, the battery module is formed by interconnecting the electrode terminals of the plurality of battery cells depending on a required amount of power and in order to realize a high-power rechargeable battery.

Battery modules can be constructed in either a block design or in a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected in series for providing a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

The battery cells of a battery pack may be arranged to form a cell stack by stacking the battery cells onto each other or arranging the battery cells in a row. Neighboring battery cells of a cell stack may be distanced from one another via cell spacers. The cell stack may be placed inside a cell stack frame delimiting the battery cells to the outside. To ensure optimal operation of the battery cells over their lifetime, it is important that a predefined pressure is exerted onto the battery cells by the cell stack frame to compensate for possible production tolerances and swelling of the battery cells.

Current battery systems typically include cell stack frames with end plates exerting pressure onto the cell stack with a rigid linear or progressive elastic pressure characteristic. A disadvantage of such rigid frameworks may be the susceptibility to length or positioning deviations because a small displacement may cause a steep increase or decrease of force applied on the cell stack, which in turn may reduce the stacks performance. To mitigate this, very precise and therefore expensive production tolerances have to be met, or other costly and intricate ways of adjusting the cell stacks pre-tension via positioning of the end plate during assembly have to be implemented. Such end plates may not be able to ensure that the right amount of pressure is applied to the cell stack over its entire lifetime.

It may thus be an object of the present application to provide a battery system with an improved cell stack frame ensuring the right pressure conditions for optimal operation of the battery cells over their entire lifetime.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a battery system includes a plurality of battery cells arranged to form a cell stack, and a cell stack frame accommodating the cell stack, wherein the cell stack frame includes at least one deformable end plate including a base portion and a Belleville spring portion extending from the base portion towards the cell stack, wherein the deformable end plate exerts a pressure onto the cell stack via the Belleville spring portion.

According to another aspect of the present disclosure, the deformable end plate has a rectangular shape corresponding to a shape of an interior space of the cell stack frame that accommodates the cell stack.

According to another aspect of the present disclosure, the base portion of the deformable end plate is fixed to side walls of the cell stack frame.

According to another aspect of the present disclosure, the Belleville spring portion of the deformable end plate includes four or more wall elements extending from the base portion of the deformable end plate towards a center of the Belleville spring portion.

According to another aspect of the present disclosure, the Belleville spring portion includes a central opening at a center of the Belleville spring portion.

According to another aspect of the present disclosure, the Belleville spring portion includes slots extending outwards from the central opening of the Belleville spring portion.

According to another aspect of the present disclosure, the Belleville spring portion includes slots extending inwards from the lateral edges of the Belleville spring portion.

Yet another aspect of the present disclosure refers to an electric vehicle including the battery system according to any one of the preceding aspects.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
- Fig. 1: illustrates a schematic top view of a battery system according to an embodiment, the battery system including a deformable end plate with a Belleville spring portion.
- Fig. 2: illustrates a front view and two sectional views of the deformable end plate according to a first embodiment.
- Fig. 3: illustrates a front view and two sectional views of the deformable end plate according to a second embodiment.
- Fig. 4: illustrates a front view and two sectional views of the deformable end plate according to a third embodiment.
- Fig. 5: illustrates three schematic top views of different embodiments of battery systems having different cell stack lengths.
- Fig. 6: illustrates a diagram showing a force to elongation (displacement) ratio for the battery system.

### Detailed Description of the Invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery system is provided. The battery system includes a plurality of battery cells, for example prismatic or pouch type battery cells. The battery cells are arranged to form a cell stack, for example by stacking the battery cells onto each other or arranging the battery cells in a row. Cell spacers may be disposed in-between adjacent or neighboring battery cells. Thus, neighboring battery cells of the cell stack may be distanced from one another via a cell spacer. The cell stack may form one or more battery packs.

The cell stack is disposed inside a cell stack frame. The cell stack frame includes at least one deformable end plate. The cell stack frame may include two end plates and two side walls connecting the end plates, wherein one or both of the end plates may be deformable end plates. The cell stack arranged inside the cell stack frame may thus be delimited from four sides by the end plates and side walls. The cell stack frame may further include a top cover and a bottom cover such that the cell stack may be delimited from all six sides. The at least one deformable end plate may be fixed to the side walls (and/or the top cover and bottom cover), for example welded, riveted or screwed. The cell stack frame may delimit the cell stack to an outside, i.e. to an environment of the cell stack. The at least one deformable end plate may form an outer delimitation of the cell stack frame. Also, the other end plate and/or the side walls may form the outer delimitation of the cell stack frame. In other words, the cell stack frame, e.g. the two end plates and two side walls, may delimit an interior space of the cell stack frame from the exterior, wherein in said interior space the cell stack is arranged. One or both of the end plates may exert a pressure onto the cell stack.

The at least one deformable end plate includes a base portion and a Belleville spring portion and is thus deformable. In other words, the deformable end plate is deformable insofar as the Belleville spring portion is deformable. The base portion may be rigid/non-deformable. The Belleville spring portion is a portion of the deformable end plate which is shaped as a Belleville spring. The deformable end plate, in the mounted position, exerts a pressure onto the cell stack via its Belleville spring portion. Thereby, the Belleville spring portion may be deformed. The Belleville spring portion may be an intrinsic part of the deformable end plate. In other words, the base portion and the Belleville spring portion may be formed together in one piece, for example from a metal, e.g. a sheet metal. The metal may e.g. be steel, or aluminum. The deformable end plate such exerts the pressure onto the cell stack via its Belleville spring portion while being supported or fixed to other parts of the cell stack frame, e.g. to the side walls via its base portion. The cell stack frame thus provides a pre-tensioning of the cell stack. In an embodiment, both the end plates are such deformable end plates, i.e. both end plates may include a base portion and a Belleville spring portion.

In contrast to current battery systems which may include end plates having a rigid linear or progressive elastic pressure characteristic, the deformable end plate according to the disclosure has, due to the Belleville spring portion, a degressive deformation characteristic. The degressive deformation characteristic may include a low, or even flat, force-displacement-inclination in the relevant, advantageous pre-tensioning force range for prismatic or pouch type cells. With the deformable end plate having the Belleville spring portion, inevitable tolerances for both the elements of the cell stack as well as the elements of the cell stack frame can be compensated by the inherent deformation ability of the deformable end plate. This may eliminate the need of additional shimming or other adjustment work during cell stacking. Further, any swelling (which may e.g. be due to ageing) of the battery cells of the cell stack may also be compensated. Also, loads which may occur during accidents may be compensated. Due to said tolerances and swelling, a length of the cell stack may vary. However, the deformable end plate may be adapted to exert a substantially constant pressure via its Belleville spring portion onto the cell stack independent of the length of the cell stack. Thus, the cell stack may be kept in the optimum range of pressure for peak performance ensuring reliable and safe operation through all its life cycle until end of life. Another advantage of providing the deformable end plate according to the disclosure is that the rest of the cell stack frame may be built as rigid as necessary to fulfill any structural requirements of the battery pack. Due to its Belleville spring portion, the end plate may always be mounted at the same fixture position without adjustments while keeping the pressure onto the cell stack in the desired range.

According to an embodiment, the deformable end plate has a rectangular shape corresponding to a shape of an interior space of the cell stack frame that accommodates the cell stack. As mentioned above, the two end plates and two side walls of the cell stack frame may delimit an interior space in which the cell stack is disposed. The interior space may have a rectangular shape. In other words, a cross-section of the cell stack frame may be rectangular. The deformable end plate may have a correspondingly formed cross-section. The deformable end plate having a rectangular shape/cross-section may mean that the base portion and/or the Belleville spring portion has a rectangular shape/cross-section. The deformable end plate having such a shape may sufficiently delimit the cell stack frame to the outside, may be reliably fixed to the side wall and/or may ensure the required pressure is exerted.

According to an embodiment, the base portion of the deformable end plate is fixed to side walls of the cell stack frame. The deformable end plate exerting the pressure onto the cell stack via its Belleville spring portion may thus be supported by the side walls of the cell stack frame. In other words, the side walls of the cell stack frame may serve as a counter-bearing. The base portion may be rigid, i.e. substantially non-deformable. The base portion may e.g. be welded, riveted or screwed to the side walls of the cell stack frame. A snap-fit connection between the base portion and the side walls is also possible. The side walls of the cell stack frame may include first connecting elements and the base portion of the deformable end plate may include second connecting elements interacting with the first connecting elements, the base portion being fixed to the side walls via the first and second first connecting elements. The deformable end plate may be fixed to the side walls at a specific position such that the base portion is immoveable. The base portion may introduce the counter-forces resulting from the Belleville spring portion pressing onto the cell stack into the side walls.

According to an embodiment, the Belleville spring portion of the deformable end plate includes four (or more) wall elements extending from the base portion of the deformable end plate towards a center of the Belleville spring portion, or the deformable end plate. As mentioned, the deformable end plate may have a rectangular shape. In an embodiment, the base portion has a rectangular shape with four lateral edges wherein from each of the lateral edges one of the four (or more) wall elements of the Belleville spring portion extends towards a center of the deformable end plate/ Belleville spring portion. The wall elements may be inclined with respect to a stacking direction, i.e. towards the cell stack. In other words, the wall elements may extend obliquely towards the cell stack. The wall elements may thereby form the Belleville spring. Such a deformable end plate may fit well and may be well suited for exerting pressure onto the cell stack.

According to an embodiment, the Belleville spring portion includes a central opening at a center of the Belleville spring portion. The central opening may be a through-hole. The Belleville spring portion of the deformable end plate may include the above-mentioned four wall elements extending from the base portion of the deformable end plate towards a center of the Belleville spring portion, wherein at the center the central opening may be arranged. The central opening may improve upon the degressive deformation characteristic of the Belleville spring portion.

According to an embodiment, the Belleville spring portion includes slots extending outwards from the center or central opening of the Belleville spring portion. The slots may be evenly distributed around the central opening. The slots may extend from the center or central opening towards the lateral edges, i.e. an outer circumference, of the Belleville spring portion. The slots may extend from the center or central opening towards the lateral edges for about 40% to 70%, e.g. about 60%, of the distance between the center or central opening and the respective lateral edge. The slots may improve upon the degressive deformation characteristic of the Belleville spring portion.

According to an embodiment, the Belleville spring portion includes slots extending inwards from the lateral edges, i.e. the outer circumference, of the Belleville spring portion. The slots extending inwards from the lateral edges may extend towards a center or central opening of the Belleville spring portion. The slots may extend from the lateral edges towards the center or central opening towards for about 40% to 70%, e.g. about 60%, of the distance between the respective lateral edge and the center or central opening. The slots may also extend along the base portion of the deformable end plate. The slots may improve upon the degressive deformation characteristic of the Belleville spring portion.

According to an embodiment, the Belleville spring portion includes first slots extending outwards from the central opening and second slots extending inwards from the lateral edges. Thus, the Belleville spring portion may include both slot types mentioned above. The first slots and second slots may be arranged alternately around the center of the Belleville spring portion. The slots may improve upon the degressive deformation characteristic of the Belleville spring portion.

The disclosure also pertains to an electric vehicle including a battery system according to the disclosure, i.e. a battery system as explained above.

According to one aspect of the present disclosure, a method for assembling a battery system according to the disclosure, i.e. a battery system as explained above, may be provided. Therein, in a first alternative, the cell stack frame may be provided with the deformable end plate placed in its fixture/mounting position. For example, the deformable end plate may in the fixture/mounting position be fixed to the side walls of the cell stack frame as explained above. Subsequently, the cell stack may be compressed and then be inserted, in its pre-compressed state, into the cell stack frame with the deformable end plate already at its fixture/mounting position. The cell stack may then be released and may expand until in contact with the deformable end plate such that the deformable end plate exerts a pressure onto the cell stack via its Belleville spring portion. In a second alternative, the cell stack frame may be provided without the deformable end plate placed in its fixture/mounting position. The cell stack may then be inserted into the cell stack frame without pre-compression. Subsequently, the deformable end plate may be placed in its fixture/mounting position thereby compressing the cell stack, i.e. exerting a pressure onto the cell stack via the Belleville spring portion. In a third alternative, the cell stack frame is provided with a deformable end plate already in its fixture/mounting possession. The cell stack may then be inserted in the frame without pre-compression, and subsequently the non-deformable or deformable end plate on the opposite side of the stack is pushed to its final mounting position, thereby compressing the cell stack and deforming the deformable end plate(s).

### Specific Embodiments

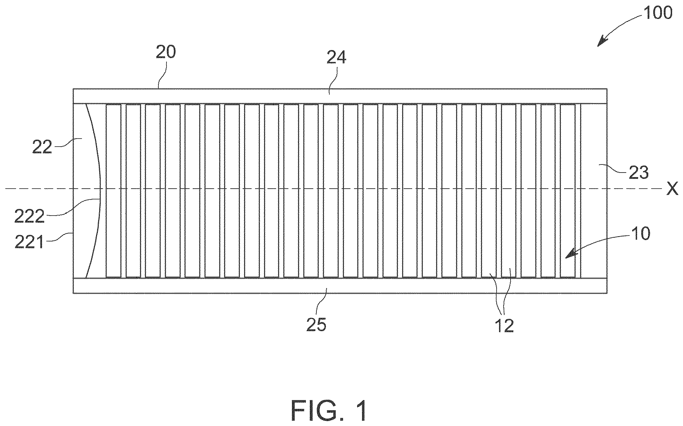

Fig. 1 illustrates a schematic top view of a battery system 100 according to an embodiment. The battery system 100 includes plurality of battery cells 12 arranged to form a cell stack 10, and a cell stack frame 20 accommodating the cell stack 10. The battery cells 12 are stacked or arranged along a stacking axis X.

The cell stack frame 20 includes two end plates 22, 23 and two side walls 24, 25 connecting the end plates 22, 23. The end plates 22, 23 and side walls 24, 25 delimit the cell stack 10 from four sides as shown in Fig. 1. The cell stack frame 20 may further include a top cover and a bottom cover (not shown) to completely encase the cell stack 10.

The end plate 22 is a deformable end plate including a base portion 221 and a Belleville spring portion 222. The base portion 221 is fixed to the side walls 24, 25 on opposite sides of the base portion 221 via its lateral edges 223 e.g. via screws or rivets at a predefined fixture position (not shown). The deformable end plate 22 has a rectangular shape corresponding to a shape of an interior space of the cell stack frame 20 that accommodates the cell stack 10. The end plate 23 may also be such a deformable end plate.

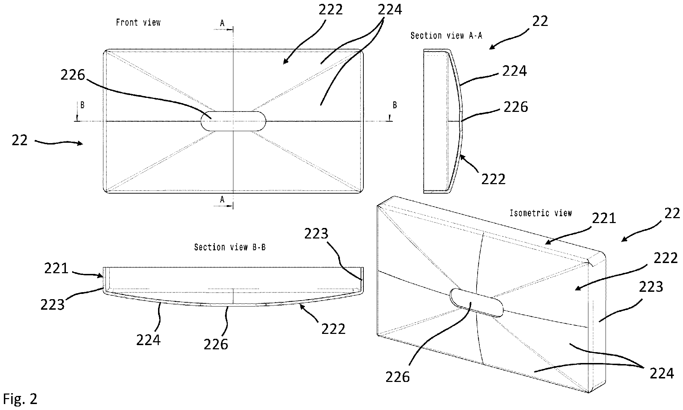

Different embodiments of the deformable end plate 22 are shown in Fig. 2 to 4. Each of these Figures shows the respective end plate 22 in a perspective (isometric) view, a front view, and in two sectional views, a first sectional view along the line A-A shown in the front view and a second sectional view along a line B-B shown in the front view.

As shown in these Figures, the base portion 221 has a rectangular shape with four lateral edges 223 wherein from each of the lateral edges 223 one of four wall elements 224 of the Belleville spring portion 222 extends towards a center of the Belleville spring portion 222. At the center of the Belleville spring portion 222, a central opening 226 is disposed.

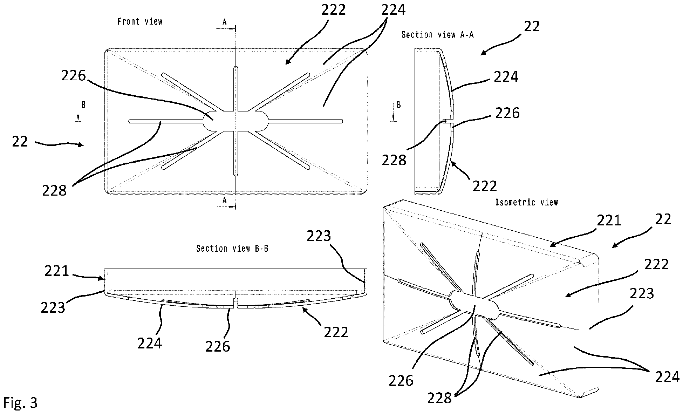

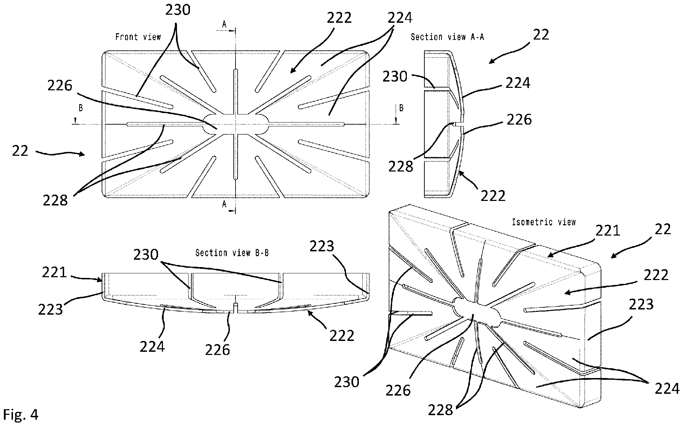

In the embodiment shown in Fig. 3, the Belleville spring portion 222 includes slots 228 extending outwards from the central opening 226 towards the lateral edges 223 (which may also be understood as lateral edges 223 of the Belleville spring portion 222). In the embodiment shown in Fig. 4, the Belleville spring portion 222 includes the slots 228 and further slots 230 extending inwards from the lateral edges 223 towards the central opening 226. The slots 230 can extend along the whole length of the lateral edges 223 and thus of the base portion 221.

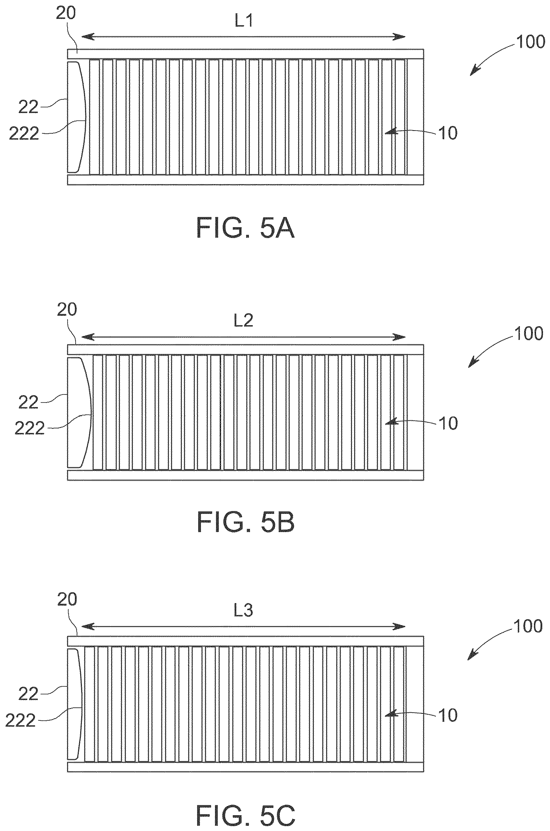

In the assembled state of the battery system 100 as shown in Fig. 1, the Belleville spring portion 222 extends from the base portion 221 towards the cell stack 10 thereby exerting a pressure onto the cell stack 10. The Belleville spring portion 222 may thereby be deformed depending on the length of the cell stack 10 as shown in Fig. 5.

Due to production tolerances of the battery cells 12 and possibly of any cell spacers (not shown) arranged in between the battery cells 12, the length of the cell stack 10 may vary. That is, it may occur during production that not all produced cell stacks have the same length. Also, the battery cells 12 of the cell stack 10 may swell due to ageing thereby expanding along the axis X and thus increasing the length of the cell stack 10. The cell stack frame 20 according to the disclosure may compensate these different lengths of the cell stack 10 because of the deformable end plate 22 with its Belleville spring portion 222.

As shown in Fig. 5, the Belleville spring portion 222 is deformed to different degrees depending on the cell stack length. In Fig. 5A the cell stack 10 has a first length L1, in Fig. 5B the cell stack 10 has a second length L2, and in Fig. 5C the cell stack 10 has a third length L3, wherein the second length L2 may be a minimal length, the third length L3 a maximum length, and the first length L1 a nominal length, i.e. L3 > L1 > L2. For the cell stack 10 having the minimal length L2, the Belleville spring portion 222 is deformed only slightly, see Fig. 5B. For the cell stack 10 having the maximum length L3, the Belleville spring portion 222 is deformed heavily, see Fig. 5C. For the cell stack 10 having the nominal length L1, the Belleville spring portion 222 is deformed moderately, see Fig. 5A. Nevertheless, the deformable end plate 22 may exert substantially the same pressure via its Belleville spring portion 222 onto the cell stack 10 independent of the length of the cell stack 10. The cell stack frame 20 with its deformable end plate 22 may thus be suited to ensure the right pressure conditions for optimal operation of the battery cells 12 over their entire lifetime.

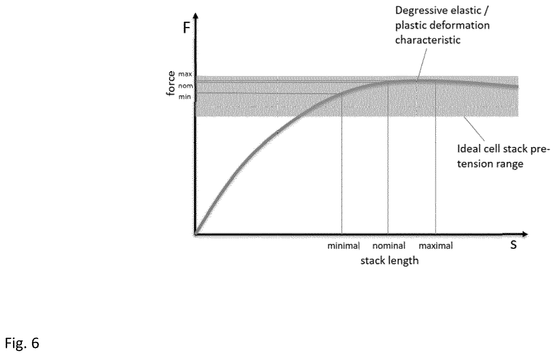

In contrast to current battery systems which may include end plates having a rigid linear or progressive elastic pressure characteristic, the deformable end plate 22 according to the disclosure has, due to the Belleville spring portion 222, a degressive elastic/plastic deformation characteristic. The degressive deformation characteristic may include a low, or even flat, force-displacement-inclination in the relevant, advantageous pre-tensioning force range for prismatic or pouch type cells as shown in Fig. 6.

Fig. 6 illustrates a diagram showing a force F to elongation (displacement) s ratio for the deformable end plate 22, i.e. for the Belleville spring portion 222. As shown, the curve has a degressive shape, wherein the force (and thus the pressure) exerted by the Belleville spring portion 222 onto the cell stack 10 stays within a window or range of an ideal cell stack pre-tension for the different cell stack lengths of Fig. 5.

Thus, the deformable end plate 22 with its Belleville spring portion 222 may compensate for inevitable tolerances for both the elements of the cell stack 10 as well as the elements of the cell stack frame 20. This may eliminate the need of additional shimming or other adjustment work during cell stacking. Further, any swelling of the battery cells 12 of the cell stack 10 may be compensated. Also, loads which may occur during accidents may be compensated. The deformable end plate 22 may thereby exert substantially the same pressure via its Belleville spring portion 222 onto the cell stack 10 independent of the length of the cell stack 10. Thus, the cell stack 10 may be kept in the optimum range of pressure for peak performance ensuring reliable and safe operation through all its life cycle until end of life. Due to its Belleville spring portion, the end plate may always be mounted at the same fixture position without adjustments while keeping the cell stacks pre-tension in the desired range.

### Reference signs

- 10: cell stack
- 12: battery cells
- 20: cell stack frame
- 22: deformable end plate
- 23: end plate
- 24: side wall
- 25: side wall
- 100: battery system
- 221: base portion of deformable end plate
- 222: Belleville spring portion of deformable end plate
- 223: lateral edges
- 224: wall elements
- 226: central opening
- 228: slots
- 230: slots
- A: axis

## Claims

1. A battery system (100), comprising:
a plurality of battery cells (12) arranged to form a cell stack (10), and
a cell stack frame (20) accommodating the cell stack (10),
wherein the cell stack frame (20) comprises
at least one deformable end plate (22) comprising a base portion (221), and
a Belleville spring portion (222) extending from the base portion (221) towards the cell stack (10),
wherein the deformable end plate (22) exerts a pressure onto the cell stack (10) via the Belleville spring portion (222).

2. The battery system (100) according to claim 1, wherein the deformable end plate (22) has a rectangular shape corresponding to a shape of an interior space of the cell stack frame (20) that accommodates the cell stack (10).

3. The battery system (100) according to claim 1 or 2, wherein the base portion (221) of the deformable end plate (22) is fixed to side walls (24, 25) of the cell stack frame (20).

4. The battery system (100) according to any one of the preceding claims, wherein the Belleville spring portion (222) of the deformable end plate (22) comprises four or more wall elements (224) extending from the base portion (221) of the deformable end plate (22) towards a center of the Belleville spring portion (222).

5. The battery system (100) according to any one of the preceding claims, wherein the Belleville spring portion (222) comprises a central opening (226) at a center of the Belleville spring portion (222).

6. The battery system (100) according to claim 5, wherein the Belleville spring portion (222) comprises slots (228) extending outwards from the central opening (226) of the Belleville spring portion (222).

7. The battery system (100) according to any one of the preceding claims, wherein the Belleville spring portion (222) comprises slots (230) extending inwards from the lateral edges of the Belleville spring portion (222).

8. An electric vehicle comprising the battery system (100) according to any one of the preceding claims.

## Amended claims

### Amended claims in accordance with Rule 137(2) EPC.

1. A battery system (100), comprising:
a plurality of battery cells (12) arranged to form a cell stack (10), and
a cell stack frame (20) accommodating the cell stack (10),
wherein the cell stack frame (20) comprises
at least one deformable end plate (22) comprising a base portion (221), and
a Belleville spring portion (222) extending from the base portion (221) towards the cell stack (10),
wherein the deformable end plate (22) exerts a pressure onto the cell stack (10) via the Belleville spring portion (222),
wherein the deformable end plate (22) has a rectangular shape corresponding to a shape of an interior space of the cell stack frame (20) that accommodates the cell stack (10),
wherein the Belleville spring portion (222) of the deformable end plate (22) comprises four or more wall elements (224) extending from the base portion (221) of the deformable end plate (22) towards a center of the Belleville spring portion (222),
wherein the Belleville spring portion (222) comprises a central opening (226) at a center of the Belleville spring portion (222).

2. The battery system (100) according to claim 1, wherein the base portion (221) of the deformable end plate (22) is fixed to side walls (24, 25) of the cell stack frame (20).

3. The battery system (100) according to claim 1, wherein the Belleville spring portion (222) comprises slots (228) extending outwards from the central opening (226) of the Belleville spring portion (222).

4. The battery system (100) according to any one of the preceding claims, wherein the Belleville spring portion (222) comprises slots (230) extending inwards from the lateral edges of the Belleville spring portion (222).

5. An electric vehicle comprising the battery system (100) according to any one of the preceding claims.
